# EUROPEAN PATENT SPECIFICATION

(11) **EP 2 456 159 B1**
(45) Date of publication and mention of the grant of the patent: **21.02.2018**
(21) Application number: 10191889.4
(22) Date of filing: 19.11.2010
(51) Int. Cl.: H04L 29/06

(54) **METHOD AND APPARATUS FOR USER REGISTRATION IN IMS**
VERFAHREN UND VORRICHTUNG ZUR BENUTZERREGISTRIERUNG IN IMS
PROCÉDÉ ET APPAREIL POUR L'ENREGISTREMENT D'UTILISATEUR DANS IMS

(43) Date of publication of application: 23.05.2012
(73) Proprietor: Nokia Solutions and Networks Oy, 02610 Espoo (FI)
(72) Inventor: Shen, Jiadong, 81379 München (DE); Cermak, Milan, 68304 Drnovice (CZ); Hoffmann, Stefan, 14656 Brieselang (DE); Milinski, Alexander, 81371 München (DE)
(74) Representative: Borgström, Markus

(56) References cited:
- EP-A1- 2 234 364
- WO-A1-2009/012813
- "Digital cellular telecommunications system (Phase 2+); Universal Mobile Telecommunications System (UMTS); IP Multimedia (IM) Subsystem Cx and Dx Interfaces; Signalling flows and message contents (3GPP TS 29.228 version 6.8.0 Release 6); ETSI TS 129 228", ETSI STANDARDS, LIS, SOPHIA ANTIPOLIS CEDEX, FRANCE, vol. 3-CN4, no. V6.8.0, 1 September 2005 (2005-09-01), XP014032726, ISSN: 0000-0001

## Description

### FIELD OF THE INVENTION

The present invention relates to IP (internet protocol) multimedia subsystem (IMS). In particular, the present invention relates to a method, apparatuses and a computer program product for maintaining and using information relating to a call state control function allocated to a user in user registration.

### BACKGROUND ART

Within the IMS as defined by 3^{rd} generation partnership project (3GPP) session initiation protocol (SIP) defined by internet engineering task force (IETF) is used for controlling communication. SIP is an application-layer control protocol for creating, modifying, and terminating sessions with one or more participants. These sessions may include internet multimedia conferences, internet telephone calls, and multimedia distribution. Members in a session can communicate via multicast or via a mesh of unicast relations, or a combination of these. Session description protocol (SDP) is a protocol which conveys information about media streams in multimedia sessions to allow the recipients of a session description to participate in the session. The SDP offers and answers can be carried in SIP messages. Diameter protocol has been defined by IETF and is intended to provide an authentication, authorization and accounting (AAA) framework for applications such as network access or IP mobility.

Generally, for properly establishing and handling a communication connection between network elements such as a user equipment and another communication equipment or user equipment, a database, a server, etc., one or more intermediate network elements such as control network elements, support nodes, service nodes and interworking elements are involved which may belong to different communication networks.

A home subscriber server (HSS) is a network element residing in the control plane of IMS. It acts as a central storage of all subscriber-specific authorizations, service profiles and preferences in an IMS network. The HSS integrates several functions: subscriber profile database, subscriber service permissions, subscriber preference settings, mobile authentication server, home location register (HLR) for mobile roaming, subscriber presence function, and subscriber location function.

A call session control function (CSCF) is a central component for signaling and control within the IMS network. It is subdivided into three separate parts and is responsible for all signaling via SIP between transport plane, control plane, and application plane of IMS. The CSCF consists of a proxy CSCF (P-CSCF), an interrogating CSCF (I-CSCF), and a serving CSCF (S-CSCF), which each have their own functions within IMS.

A P-CSCF is responsible for interfacing directly with the transport plane components and it is the first point of signaling within IMS for any end-point. As the name implies, the P-CSCF is a proxy for all SIP messages from end-points to the rest of the IMS network. It is usually in the home network, but may reside in the visited network. The P-CSCF uses a domain name server (DNS) look-up to determine the I-CSCF to send SIP messages, which could be an I-CSCF in its own network or another I-CSCF across an administrative domain.

The main function of an I-CSCF is to simply proxy between a P-CSCF as entry point and an S-CSCF as control point for applications found in the applications plane. When a P-CSCF receives a registration request SIP message, it performs a DNS look-up to discover an appropriate I-CSCF to route the message. Once the I-CSCF receives a SIP message, it performs a home subscriber server (HSS) look-up via diameter to determine the S-CSCF that is associated with the end-point terminal. When it receives this information, it forwards the SIP message to the appropriate S-CSCF for further treatment.

An S-CSCF is responsible for interfacing with application servers (AS) in the application plane. Upon receiving a registration request SIP message from an I-CSCF, the S-CSCF queries the HSS via diameter protocol to register the terminal as being currently served by itself. This is very important as subsequent session establishment requires knowing which S-CSCF is responsible for the terminal session control. As part of the registration process, the S-CSCF will use credentials it obtains from the query to the HSS to issue a SIP message "challenge" back to the initiating P-CSCF to authenticate the terminal.

There can be multiple S-CSCFs in a network for load distribution and high availability reasons. For each user, an S-CSCF is assigned at registration. The S-CSCF is selected by the I-CSCF based on information queried from the HSS. If an S-CSCF has been assigned before, the HSS returns this S-CSCF name. If not, the HSS returns capabilities and the I-CSCF selects an S-CSCF based on capabilities and a configured list of S-CSCF names. The selected S-CSCF stores its name in the HSS during the registration.

EP 2 234 364 discloses a method for providing user services in an IMS. An HSS receives a user registration request from an S-CSCF and compares the name of a first S-CSCF with a stored name of an S-CSCF assigned to a user. If the names are not the same, the HSS informs the S-CSCF and the S-CSCF sends a failure response to the I-CSCF.

The 3GPP IMS specifications describe a restoration procedure. This procedure is useful when S-CSCF lose data and tries to recover it from an HSS permanent storage. However, these specifications do not describe the case when an S-CSCF is not assigned at the HSS side but the S-CSCF still has user data. Such an inconsistency may occur even if the S-CSCF and the HSS fully support the standards.

### SUMMARY

It is therefore an object of this invention to address some of the above mentioned problems by providing a method, a call session control function, and a computer program product for user registration in IMS. The proposed solution provides to correct inconsistencies during re-registration because the S-CSCF detects that the HSS has no information about the assigned S-CSCF and the S-CSCF starts initial registration.

According to a first aspect of the invention, there is provided a method, as defined by independent claim 1, (for user registration in internet protocol multimedia subsystem) comprising receiving, at a server call session control function, a registration request comprising a first identification of a call session control function, comparing, at the server call session control function, the first identification of the call session control function with a second identification of the call session control function, and proceeding, at the server call session control function, with registration request based on the result of said comparing. The register request may be e.g. a SIP REGISTER request message, the call session control function may be an S-CSCF and the identification of the control function may be e.g. a uniform resource identifier (URI) name of an S-CSCF. In some embodiments, the registration request is received from another call session control function, e.g. an I-CSCF. According to one embodiment, said comparing comprises detecting an indication or a parameter.

According to one embodiment, the method further comprises performing, at a server call session control function, a user re-registration without subscriber server interaction in case the first identification of the call server control function is identical (same, matching) to the second identification of the call server control function.

According to another embodiment, the method further comprises performing, at the server call session control function, a new user registration in case the first identification of the call server control function is different from the second identification of the call server control function. In some embodiments, the new user registration comprises storing an assignment of the control function for the user in a subscriber server (e.g. an HSS).

According to a further embodiment, the method further comprises generating, at the server call session control function, the second identification of the call session control function by modifying an identification of the call session control function. In some embodiments, the modifying comprises modifying by adding a parameter to the identification of the call session control function. In some embodiments, the parameter comprises a uniform resource identifier parameter.

According to a yet further embodiment, the method comprises storing the second identification of the call session control function in a subscriber server (e.g. an HSS). In some embodiments, the second identification of the call session control function stored in the subscriber server is also stored in a memory of said the call session control function. In some embodiments, the storing is performed before receiving the registration request.

According to a second aspect of the invention, there is provided a call session control function, as defined by independent claim 6, comprising a receiver configured to receive a registration request comprising a first identification of a call session control function, and a processor configured to compare the first identification of the call session control function with a second identification of the call session control function, wherein the processor is configured to proceed with registration request based on the result of the comparing. The registration request may be e.g. a SIP REGISTER request message, the control function may be an S-CSCF and the identification of the control function may be e.g. a uniform resource identifier (URI) name of an S-CSCF. In some embodiments, the registration request is received from another control function, e.g. an I-CSCF.

According to one embodiment, the processor is further configured to perform a user re-registration without subscriber server (e.g. an HSS) interaction in case the first identification of the call session control function is identical (same, matching) to the second identification of the call session control function.

According to another embodiment, the processor is further configured to perform a new user registration with subscriber server (e.g. an HSS) interaction in case the first identification of the call session control function is different from the second identification of the call session control function. In some embodiments, the new user registration comprises storing an assignment of the call session control function for the user in a subscriber server (e.g. an HSS).

According to a further embodiment, the call session control function further comprises a processor configured for generating the second identification of the call session control function by modifying an identification of the call session control function. In some embodiments, the modifying comprises modifying by adding a parameter to the identification of the call session control function. In some embodiments, the parameter comprises a uniform resource identifier parameter.

According to a yet further embodiment, the call session control function comprises a memory configured to store the second identification of the call session control function in a subscriber server (e.g. an HSS). In some embodiments, the control function comprises a memory and the second identification of the call session control function stored in the subscriber server is also stored in the memory of said the call session control function. In some embodiments, the storing is performed before receiving the registration request.

According to a fourth aspect of the invention, there is provided a computer program product, as defined by independent claim 11, comprising code means adapted to perform the steps of: receiving, at the server call session control function, a registration request comprising a first identification of a control function, comparing, at the server call session control function, the first identification of a control function with a second identification of the control function stored in a subscriber server, and proceeding, at the server call session control function, with user registration based on the result of the comparing, when the program is run on a processor. The register request may be e.g. a SIP REGISTER request message, the control function may be an S-CSCF and the identification of the control function may be e.g. a uniform resource identifier (URI) name of an S-CSCF. In some embodiments, the registration request is received from another control function, e.g. an I-CSCF.

According to a further embodiment, the code means are adapted to perform all the steps of the dependent method claims.

Further embodiments are as defined by the dependent claims.

Embodiments of the present invention may have one or more of following advantages:
- more reliable S-CSCF operation
- automatic correction of inconsistencies between S-CSCF and HSS
- better user experience for IMS users

### BRIEF DESCRIPTION OF DRAWINGS

Figure 1 illustrates an IMS user re-registration procedure according to 3GPP standards
Figure 2 illustrates a method according to an embodiment of the invention
Figure 3 illustrates another method according to an embodiment of the invention
Figure 4 illustrates a control function according to an embodiment of the invention
Figure 5 illustrates an apparatus according to an embodiment of the invention

### DETAILED DESCRIPTION OF SOME EMBODIMENTS

The present invention is described herein with reference to particular non-limiting examples. A person skilled in the art will appreciate that the invention is not limited to these examples, and may be more broadly applied.

In particular, the present invention and its embodiments are mainly described in relation to 3GPP specifications being used as non-limiting examples for network configurations. As such, the description of the embodiments given herein specifically refers to terminology which is directly related thereto. Such terminology is only used in the context of the presented non-limiting examples, and does naturally not limit the invention in any way. Rather, any other network configuration or implementation may also be utilized as long as compliant with the features described herein.

In the following, various embodiments and implementations of the present invention and its aspects are described using several alternatives. It is generally to be noted that, according to certain needs and constraints, all of the described alternatives may be provided alone or in any conceivable combination (also including combinations of individual features of the various alternatives).

An inconsistency between S-CSCF assignments in an S-CSCF and in HSS may occur for example because of following scenarios:
A UE is registered. The HSS decides to deregister the UE and sends a registration-termination-request (RTR) message to the S-CSCF. The S-CSCF is not available at this moment e.g. because of a broken connection. As a result, the assignment is removed at the HSS but the S-CSCF data remains unchanged.

Or, a UE is registered. The UE sends a de-register message. The S-CSCF sends a server-assignment-request (SAR) message and removes the assignment at the HSS. The S-CSCF fails during server-assignment-answer (SAA) handling and user data remains at the S-CSCF.

In this case, at re-registration, the I-CSCF will not receive an S-CSCF name from the HSS. The I-CSCF will thus perform a new S-CSCF selection. There are two possible results:
a) the same (correct) S-CSCF (S-CSCF#1) is selected
b) a different S-CSCF (S-CSCF#2)is selected.

In case b) the S-CSCF#2 will perform a new registration including HSS interaction, thus the registration states in the HSS and the S-CSCF (now S-CSCF#2) become re-aligned (also on other nodes like P-CSCF or AS). The registration in the S-CSCF#1 simply expires and the inconsistency is corrected.

However, case a) is quite frequent even in large networks, e.g. because often operators prefer selection of a local S-CSCF. Without improvements, in case a), the S-CSCF performs a re-registration per 3GPP procedures without HSS interaction and the states remain inconsistent. This may lead to problems; in particular terminating calls cannot be delivered.

When such inconsistency exists then:
1. A re-registration can be successful from the UE and CSCF point of view because the I-CSCF receives capabilities from the HSS and the same S-CSCF can be selected as the S-CSCF still holding the user data. Such REGISTER request is re-register from S-CSCF point of view and no communication with HSS is needed. However, the inconsistency is not corrected during re-registration.
2. The UE can not deregister itself because the I-CSCF receives error response to user-authorization-request (UAR) message.
3. Terminating request for user may fail because the I-CSCF receives capabilities from the HSS in location-info-answer (LIA) message. The I-CSCF may select the same S-CSCF as the S-CSCF holding the user data. Terminating request is correctly handled in this case. But the I-CSCF may select a new S-CSCF. The new S-CSCF executes a default registration but it fails because the HSS sends a SAA with error_in_assignment_type in the result code and without restoration info. There is no restoration-info stored in the HSS because user is not registered from the HSS point of view.

According to an aspect of the invention, there is provided a solution for an S-CSCF to recognize whether an I-CSCF sent a REGISTER to the S-CSCF based on the HSS information or whether the I-CSCF did perform an S-CSCF selection itself. This information may not be signaled by the I-CSCF to the S-CSCF, but derived by the S-CSCF. The invented solution to derive it is that the S-CSCF can store a (possibly only slightly) different S-CSCF name (e.g. URI name) in the HSS than the one stored in and/or received from the I-CSCF. For example, the S-CSCF can add a URI parameter to the name. The URI-parameter need not be specific for this usage, but can be a parameter already added for other usage. The S-CSCF can evaluate the request-URI of a register message (e.g. a SIP REGISTER). If the request-URI equals the name the S-CSCF stored in the HSS, it can proceed as usual and defined by the 3GPP. If the request-URI is different, for example if the request-URI contains an additional parameter, an inconsistency has been detected. In this case the S-CSCF can correct the misalignment and can perform a new registration, i.e can behave like S-CSCF#2 in scenario b) above.

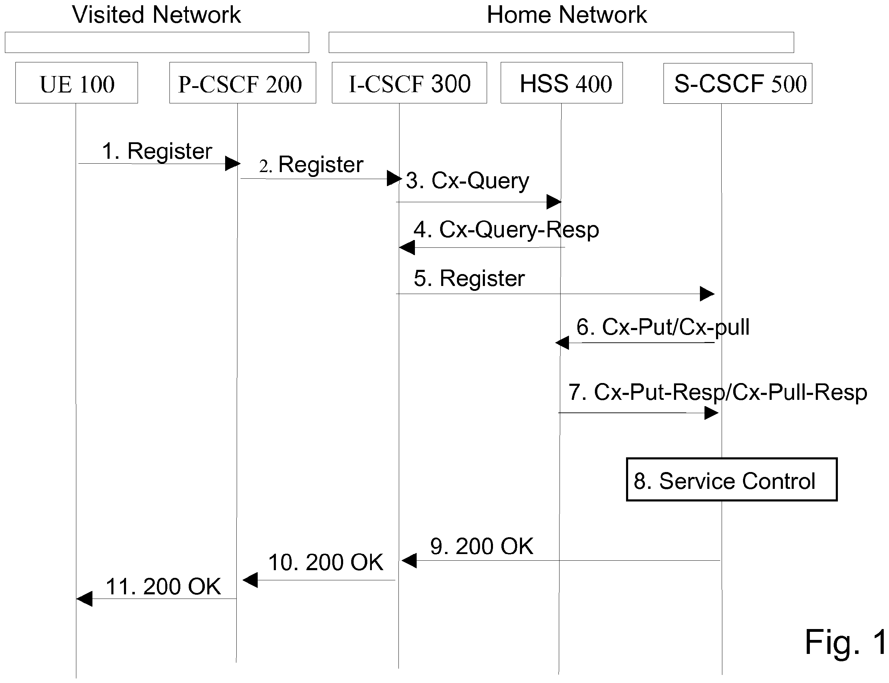

Figure 1 shows a flow chart illustrating initial UE 100 registration in IMS. After an UE 100 has obtained IP connectivity, it can perform IMS registration with (one or more of) the following steps:
1. The UE 100 can send a register information flow (e.g. SIP REGISTER request) (including e.g. public user identity, private user identity, home network domain name, UE 100 IP address, instance identifier, and/or globally routable user agent URI (GRUU) support indication) to a P-CSCF 200. Upon receipt of the register information flow, the P-CSCF 200 can examine the "home domain name" to discover the entry point to the home network (i.e. an I-CSCF 300).
2. The P-CSCF 200 can send the register information flow (e.g. a SIP REGISTER request) to the I-CSCF 300 (including e.g. P-CSCF 200 address/name, public user identity, private user identity, P-CSCF 200 network identifier, and/or UE 100 IP address). A name-address resolution mechanism can be utilized in order to determine the address of the home network from the home domain name. The P-CSCF 200 network identifier is a string that can identify at the home network, the network where the P-CSCF 200 is located (e.g., the P-CSCF 200 network identifier may be the domain name of the P-CSCF 200 network).
3. The I-CSCF 300 can send a query (e.g. a Cx-query/Cx-Select-Pull information flow) to an HSS 400 (including e.g. public user identity, private user identity, and/or P-CSCF 200 network identifier). The HSS 400 can check whether the user is registered already. The HSS 400 can indicate whether the user is allowed to register in that P-CSCF 200 network (identified by the P-CSCF 200 network identifier) according to the user subscription and operator limitations/restrictions if any.
4. A query response (e.g. a Cx-Query Resp/Cx-Select-Pull Resp) can be sent from the HSS 400 to the I-CSCF 300. It may contain the S-CSCF name, if it is known by the HSS 400, or the S-CSCF 500 capabilities, if it is necessary to select a new S-CSCF 500. When capabilities are returned, the I-CSCF 300 can perform new S-CSCF 500 selection function based on the capabilities returned by the HSS 400. If the checking in HSS 400 was not successful the query response (e.g. a Cx-Query Resp) can reject the registration attempt. The I-CSCF 300, using the name of the S-CSCF 500, can determine the address of the S-CSCF 500 through a name-address resolution mechanism. The name-address resolution mechanism can be allowed to take the load information of the S-CSCFs (e.g. obtained using network management procedures) into consideration when deciding the address of the S-CSCF 500. The I-CSCF 300 can also determine the name of a suitable home network contact point, possibly based on information received from the HSS 400.
5. I-CSCF 300 can then send the register information flow (e.g. a SIP REGISTER request) (including e.g. P-CSCF 200 address/name, public user identity, private user identity, P-CSCF 200 network identifier and/or UE 100 IP address) to the selected S-CSCF 500. The home network contact point can be used by the P-CSCF 200 to forward session initiation signaling to the home network. The S-CSCF 500 may reject the registration if the number of registered contact addresses for a public user identity from the same UE 100 exceeds the limit of simultaneous registrations configured at the S-CSCF 500. The S-CSCF 500 can store the P-CSCF 200 address/name, as supplied by the visited network. This represents the address/name that the home network forwards the subsequent terminating session signaling to the UE 100. The S-CSCF 500 can store the P-CSCF 200 network ID information.
6. The S-CSCF 500 can send a query (e.g. a Cx-Put/Cx-Pull) (including e.g. public user identity, private user identity and/or S-CSCF name) to the HSS 400.
7. The HSS 400 can store the S-CSCF name for that user and can return a response (e.g. a Cx-Put Resp/Cx-Pull Resp) (including e.g. user information) to the S-CSCF 500. The user information passed from the HSS 400 to the S-CSCF 500 may include one or more names/addresses information which can be used to access the platform(s) used for service control while the user is registered at this S-CSCF 500. The S-CSCF 500 can store the information for the indicated user. In addition to the names/addresses information, security information may also be sent for use within the S-CSCF 500.
8. Based on the filter criteria, the S-CSCF 500 can send register information to the service control platform and can perform whatever service control procedures are appropriate.
9. The S-CSCF 500 can return a confirmation response message(e.g. a 200 OK information flow) (including e.g. home network contact information, a GRUU set) to the I-CSCF 300.
10. The I-CSCF 300 can send a confirmation response message (e.g. a 200 OK information flow) (including e.g. home network contact information, a GRUU set) to the P-CSCF 200. The I-CSCF 300 can release all registration information after sending an ok response message (e.g. 200 OK information flow).
11. The P-CSCF 200 can store the home network contact information, and can send a confirmation message (e.g. a 200 OK information flow) (including e.g. a GRUU set) to the UE 100. The P-CSCF 200 may subscribe at the PCRF to notifications of the status of the IMS signaling connectivity.

According to some embodiments of the present invention, in step 6, the S-CSCF 500 can send a modified S-CSCF name (e.g. a URI name) to the HSS 400. Accordingly, in step 7, the HSS 400 can store the modified S-CSCF name for the user. The S-CSCF 500 may modify the S-CSCF name, for example, by adding a parameter/indication to the S-CSCF name, e.g. a URI parameter. The URI parameter may be specific for this usage, or it can be a parameter already added for other usage. Accordingly, the HSS 400 can store an S-CSCF name which is different from the S-CSCF name stored in and/or received from the I-CSCF 300 for that particular S-CSCF 500. The S-CSCF 500 can store in its own memory the name it has stored in the HSS 400.

For example, the lskpmc parameter can be used in the end of the S-CSCF URI-name as an indirect indication: sip:s-cscf1.ims.net;lskpmc=S01. This parameter already has its own purpose: to indicate the process id within the S-CSCF. As this will only be inserted by the S-CSCF, it can be reused as an indication, instead of introducing a completely new explicit indication.

A re-registration can follow the same procedure. Normally, during a UE 100 re-registration, the HSS 400 can return the name of the currently assigned S-CSCF 500 to the I-CSCF 300 in step 4. In those cases, as described above, when the S-CSCF 500 assignments in the HSS 400 has been deleted or lost, the HSS 400 does not have S-CSCF 500 assignment stored and thus can not return it to the I-CSCF 300. Rather, the HSS 400 can return S-CSCF capabilities for the I-CSCF 300 to select a new S-CSCF 500. Therefore the ongoing re-registration can become a new registration from the I-CSCF 300 point of view in step 4. I-CSCF 300 can send a register information flow (e.g. SIP REGISTER request) to the selected S-CSCF 500. Now, because the modified S-CSCF name was stored in the HSS 400, the S-CSCF 500 may compare the S-CSCF name (e.g. URI name) in its own memory, which is the name it has stored in the HSS 400 before, with the S-CSCF name (e.g. URI name) included in the register information flow (e.g. in the request-URI field) to find out whether the register request is in fact a re-registration request where the current S-CSCF 500 assignment has been lost in the HSS 400 or a new registration.

For example, in case of the lskpmc parameter, the S-CSCF 500 can check whether the parameter, e.g. an indication: sip:s-cscf1.ims.net;lskpmc=S01, is present in the request. If it is not present in the request, the S-CSCF is selected by the I-CSCF.

If the S-CSCF names do not match (are different, not the same), e.g. if the S-CSCF name included in the request does not comprise the additional parameter, it means that the I-CSCF 300 has selected this S-CSCF 500 and therefore it can be treated as a new UE 100 registration from the S-CSCF 500 point of view . The S-CSCF 500 can continue with steps 6 and 7 (and all the rest) as in regular new registration procedure.

If the S-CSCF names match (are equal, identical), e.g. if the S-CSCF name included in the request comprises the additional parameter, it means that the S-SCSF name was returned by the HSS 400 and therefore it is in fact a re-registration of an already registered UE 100. In this case, the S-CSCF 500 may omit HSS 400 interaction (steps 6 and 7) and can continue with the rest of the steps as in regular re-registration procedure.

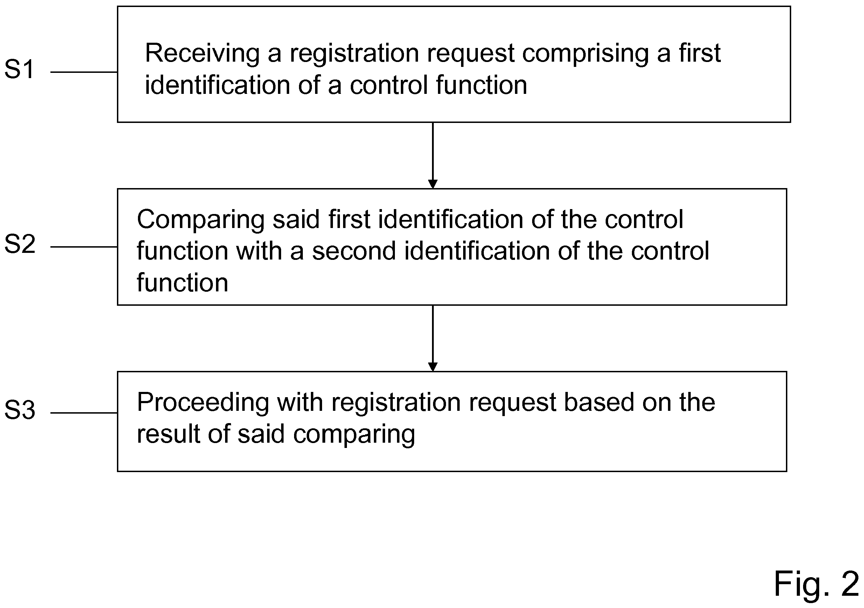

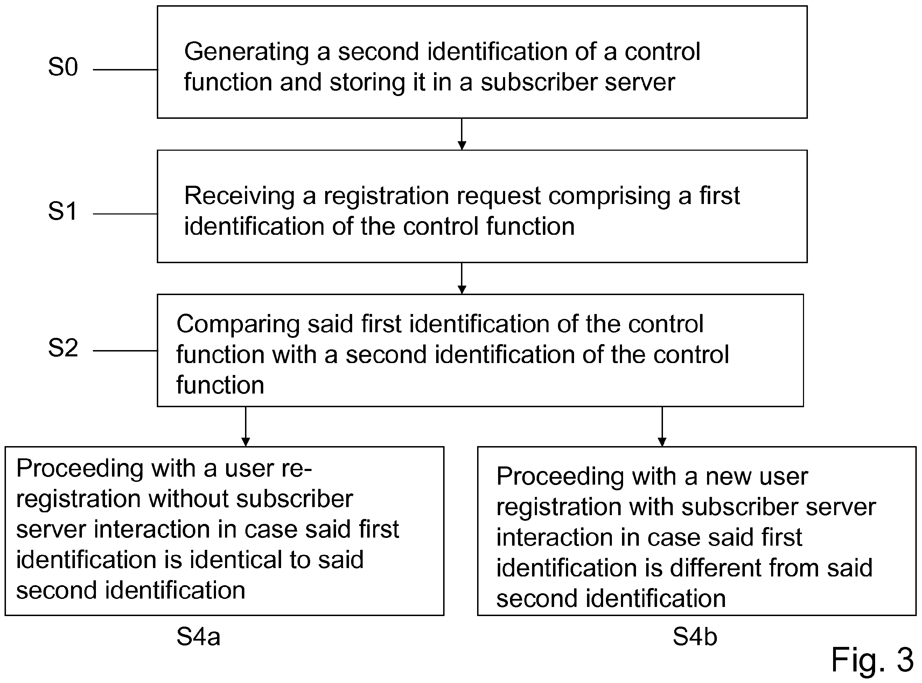

Thus, in a method according to an embodiment of the invention, as illustrated in Figures 2 and 3, in an optional step S0 a second identification, e.g. a URI name, of a control function (e.g. S-CSCF 500) can be generated by modifying a first URI name of the S-CSCF 500 and it can be stored in a subscriber server (e.g. an HSS 400) as well as in S-CSCFs 500 own memory. In step S1, a registration request (e.g. SIP REGISTER) comprising a first URI name of the S-CSCF 500 can be received. In step S2, said first S-CSCF 500 URI name can be compared with the second S-CSCF 500 URI name stored in S-CSCFs 500 own memory, which is the URI name it has stored in the HSS 400 before. Finally, in step S3, it is proceeded with the registration request based on the result of the comparing. In a further step S4a, a user re-registration without HSS 400 interaction can be performed in case said first S-CSCF 500 URI name is identical to said second S-CFCS 500 URI name. Or as in a further step S4b, a new user registration can be performed (with HSS 400 interaction) in case said first S-CSCF 500 URI name is different from said second S-CFCS 500 URI name.

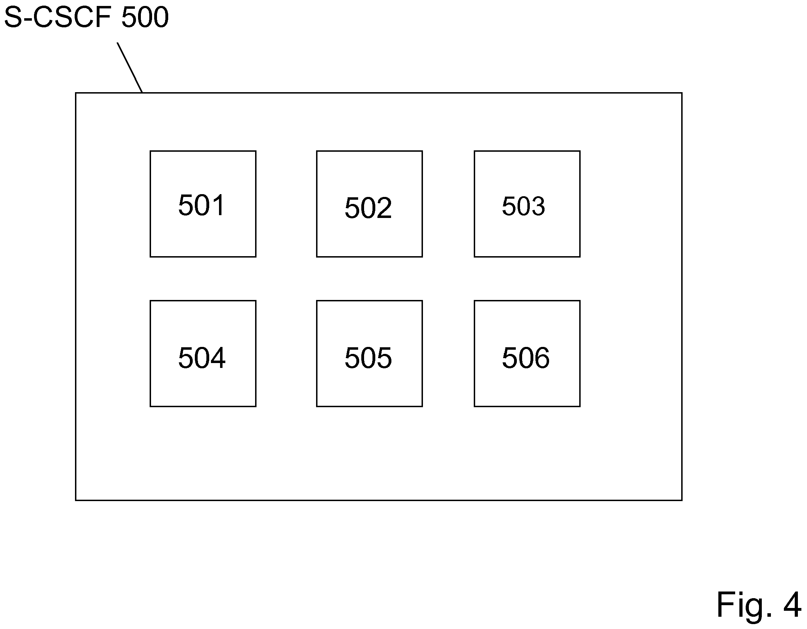

An apparatus, e.g an S-CSCF 500, according to an embodiment of the invention is illustrated in Figure 4. The S-CSCF 500 may comprise means for generating 504 (e.g. a processor, generator) a second identification of a control function, e.g. an S-CSCF 500 URI name, by modifying an S-CSCF 500 URI name. It can also comprise means for storing 505 the second S-CSCF 500 URI name in a subscriber server, e.g. in an HSS 400. The S-CSCF 500 can also store in its own memory 506 the second URI name it has stored in the HSS 400. The S-CSCF 500 may comprise means for receiving 501 (an input, a receiver or some other receiving means) a registration request (e.g. from I-CSCF 300) comprising a first S-CSCF 500 URI name. The S-CSCF 500 may also comprise means for comparing 502 (e.g. a processor or a comparator) said first S-CSCF 500 URI name (received e.g. from I-CSCF 300) with the second S-CSCF 500 URI name stored in HSS 400 and in S-CSCFs own memory 506. S-CSCF may further comprise means for proceeding 503 (e.g. a processor) with registration request based on the result of said comparing.

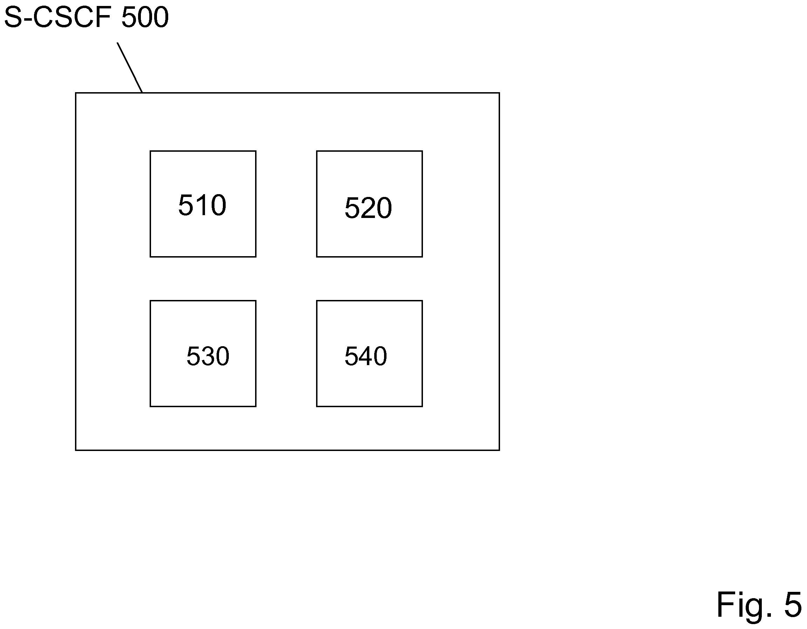

An apparatus 500, e.g. an S-CSCF 500, according to another embodiment of the invention is illustrated in Figure 5. The apparatus 500 may comprise means for generating 510 (e.g. a processor) a second identity of the apparatus 500 by modifying a first identity of the apparatus 500, e.g. by adding an additional parameter to the first identity of the apparatus 500. The apparatus 500 may comprise means for storing 520 said second identity of the apparatus 500 in a subscriber server (e.g. in an HSS 400) and in the own memory of the apparatus 500, means for receiving 530 a registration request (e.g. a SIP REGISTER) to register a user (e.g. from an I-CSCF 300), and means for performing 540 a user registration. The means for performing a user registration 540 may be configured to perform a user registration comprising generating the second identity of the apparatus 500 by modifying the first identity of the apparatus, e.g. by adding an additional parameter to the first identity of the apparatus 500, and storing the second identity of the apparatus in the subscriber server 400, if the registration request comprises the first identity of the apparatus, i.e. does not comprise the additional parameter.

The same problem can apply also to other requests than register requests. When a non-register request is received (e.g. an invite request like a SIP INVITE) at the I-CSCF 300, the I-CSCF 300 can also query the HSS 400 to retrieve the S-CSCF 500 address to send the request to.

In normal cases, when there is an S-CSCF 500 address stored in the HSS 400, the I-CSCF 300 can forward the request to the S-CSCF 500 using this stored address. In this case the indication can be contained in the S-CSCF 500 address (e.g. in route field) and the S-CSCF 500 receiving the invite request can know that correct address is stored in the HSS 400.

In those cases, as described above, when the S-CSCF 500 assignments in the HSS 400 has been deleted or lost, the HSS 400 can not have the S-CSCF 500 assignment stored. Then the I-CSCF 300 can select an S-CSCF 500 for the user. If the same S-CSCF 500 is selected by the I-CSCF 300, the I-CSCF 300 can forward the request to this S-CSCF 500, but no indication is contained in the S-CSCF 500 address (e.g. in route field). The S-CSCF 500 hosting this user can recognize via the absence of the indication that there is inconsistency between the S-CSCF 500 and the HSS 400 and can try to store its address in the HSS 400.

In general, it is to be noted that respective functional blocks or elements according to above-described aspects can be implemented by any known means, either in hardware and/or software, respectively, if it is only adapted to perform the described functions of the respective parts. The mentioned method steps can be realized in individual functional blocks or by individual devices, or one or more of the method steps can be realized in a single functional block or by a single device.

Furthermore, method steps and functions likely to be implemented as software code portions and being run using a processor at one of the entities are software code independent and can be specified using any known or future developed programming language such as e.g. Java, C++, C, and Assembler. Method steps and/or devices or means likely to be implemented as hardware components at one of the entities are hardware independent and can be implemented using any known or future developed hardware technology or any hybrids of these, such as MOS, CMOS, BiCMOS, ECL, TTL, etc, using for example ASIC components or DSP components, as an example. Generally, any method step is suitable to be implemented as software or by hardware without changing the idea of the present invention. Devices and means can be implemented as individual devices, but this does not exclude that they are implemented in a distributed fashion throughout the system, as long as the functionality of the device is preserved.

## Claims

1. A method for user registration in an internet protocol multimedia subsystem comprising:
receiving (S1), at a serving call session control function, S-CSCF, (500), a user registration request from an interrogating call session control function, I-CSCF, (300), the user registration request comprising a first identification of the S-CSCF;
the method being **characterized by** further comprising:
comparing, at the S-CSCF, (S2) said first identification of the S-CSCF with a second identification of the S-CSCF that is already stored within the S-CSCF; and
performing (S3), at the S-CSCF , a user re-registration without interaction with a home subscriber server, HSS, (400) in case said first identification of the S-CSCF is identical to said second identification of the S-CSCF; and
performing, at the S-CSCF, a user registration with interaction with an HSS in case said first identification of the S-CSCF is different from said second identification of the S-CSCF.

2. The method of claim 1, wherein said comparing comprises detecting an indication or a parameter in said first identification of the S-CSCF comprised in the received user registration request.

3. The method of any of claims 1 to 2, further comprising:
generating (S0), at the S-CSCF, said second identification of the S-CSCF function by modifying a first identification of the S-CSCF.

4. The method of claim 3, wherein said modifying comprises modifying by adding a parameter or an indication to said first identification of the S-CSCF.

5. The method of any of claims 1 to 4, further comprising:
storing (S0) said second identification of the S-CSCF in a HSS.

6. A serving call session control function, S-CSCF, (500) comprising:
a receiver (501) configured to receive, at the S-CSCF, a user registration request sent by an interrogating call session control function, I-CSCF, (300), comprising a first identification of the S-CSCF;
the S-CSCF being **characterized by** further comprising:
a processor (502) configured to compare, at the S-CSCF, said first identification of the S-CSCF with a second identification of the S-CSCF that is already stored within the S-CSCF;
wherein the processor is further configured to:
perform, at the S-CSCF, a user re-registration without interaction with a home subscriber server, HSS, (400) in case said first identification of the S-CSCF is identical to said second identification of the S-CSCF; and
perform, at the S-CSCF, a user registration with interaction with an HSS in case said first identification of the S-CSCF is different from said second identification of the S-CSCF.

7. The S-CSCF of claim 6, wherein said comparing comprises detecting an indication or a parameter in said first identification of the S-CSCF comprised in the received user registration request.

8. The call session control function (500) of any of claims 6 to 7, wherein the processor is further configured to generate, at the S-CSCF, said second identification of the S-CSCF by modifying a first identification of the S-CSCF.

9. The call session control function (500) of claim 8, wherein said modifying comprises modifying by adding a parameter or an indication to said first identification of the S-CSCF.

10. The S-CSCF (500) of any of claims 6 to 9 further comprising:
a memory configured to store said second identification of the S-CSCF in the HSS(400).

11. A computer program product comprising code means adapted to perform all the steps of any of claims 1 to 5 when the program is run on a processor.

## Patentansprüche

1. Verfahren zur Benutzerregistrierung in einem Internetprotokollmultimediasubsystem, das Folgendes umfasst:
Empfangen (S1) an einer Serving Call Session Control Function, S-CSCF, (500) einer Benutzerregistrierungsanforderung von einer Interrogating Call Session Control Function, I-CSCF, (300), wobei die Benutzerregistrierungsanforderung eine erste Identifizierung der S-CSCF umfasst;
wobei das Verfahren **dadurch gekennzeichnet ist, dass** es ferner Folgendes umfasst:
Vergleichen an der S-CSCF (S2) der ersten Identifizierung der S-CSCF mit einer zweiten Identifizierung der S-CSCF, die bereits in der S-CSCF gespeichert ist; und
Durchführen (S3) an der S-CSCF einer Benutzerneuregistrierung ohne Interaktion mit einem Home Subscriber Server, HSS, (400) in dem Fall, in dem die erste Identifizierung der S-CSCF mit der zweiten Identifizierung der S-CSCF identisch ist; und
Durchführen an der S-CSCF einer Benutzerregistrierung mit Interaktion mit einem HSS, in dem Fall, in dem sich die erste Identifizierung der S-CSCF von der zweiten Identifizierung der S-CSCF unterscheidet.

2. Verfahren nach Anspruch 1, wobei das Vergleichen ein Detektieren einer Anzeige oder eines Parameters in der ersten Identifizierung der S-CSCF, die bzw. der in der empfangenen Benutzerregistrierungsanforderung beinhaltet ist, umfasst.

3. Verfahren nach einem der Ansprüche 1 bis 2, das ferner Folgendes umfasst:
Erzeugen (S0) an der S-CSCF der zweiten Identifizierung der S-CSCF-Funktion durch Modifizieren einer ersten Identifizierung der S-CSCF.

4. Verfahren nach Anspruch 3, wobei das Modifizieren ein Modifizieren durch Hinzufügen eines Parameters oder einer Anzeige zur ersten Identifizierung der S-CSCF umfasst.

5. Verfahren nach einem der Ansprüche 1 bis 4, das ferner Folgendes umfasst:
Speichern (S0) der zweiten Identifizierung der S-CSCF auf einem HSS.

6. Serving Call Session Control Function, S-CSCF, (500), die Folgendes umfasst:
einen Empfänger (501), der dazu ausgelegt ist, an der S-CSCF eine Benutzerregistrierungsanforderung zu empfangen, die von einer Interrogating Call Session Control Function, I-CSCF, (300) gesendet wird und eine erste Identifizierung der S-CSCF umfasst;
wobei die S-CSCF **dadurch gekennzeichnet ist, dass** sie ferner Folgendes umfasst:
einen Prozessor (502), der dazu ausgelegt ist, an der S-CSCF die erste Identifizierung der S-CSCF mit einer zweiten Identifizierung der S-CSCF zu vergleichen, die bereits in der S-CSCF gespeichert ist;
wobei der Prozessor ferner für Folgendes ausgelegt ist:
Durchführen an der S-CSCF einer Benutzerneuregistrierung ohne Interaktion mit einem Home Subscriber Server, HSS, (400) in dem Fall, in dem die erste Identifizierung der S-CSCF mit der zweiten Identifizierung der S-CSCF identisch ist; und
Durchführen an der S-CSCF einer Benutzerregistrierung mit Interaktion mit einem HSS, in dem Fall, in dem sich die erste Identifizierung der S-CSCF von der zweiten Identifizierung der S-CSCF unterscheidet.

7. S-CSCF nach Anspruch 6, wobei das Vergleichen ein Detektieren einer Anzeige oder eines Parameters in der ersten Identifizierung der S-CSCF, die bzw. der in der empfangenen Benutzerregistrierungsanforderung beinhaltet ist, umfasst.

8. Call Session Control Function (500) nach einem der Ansprüche 6 bis 7, wobei der Prozessor ferner dazu ausgelegt ist, an der S-CSCF die zweite Identifizierung der S-CSCF durch Modifizieren einer ersten Identifizierung der S-CSCF zu erzeugen.

9. Call Session Control Function (500) nach Anspruch 8, wobei das Modifizieren ein Modifizieren durch Hinzufügen eines Parameters oder einer Anzeige zur ersten Identifizierung der S-CSCF umfasst.

10. S-CSCF (500) nach einem der Ansprüche 6 bis 9, die ferner Folgendes umfasst:
einen Speicher, der dazu ausgelegt ist, die zweite Identifizierung der S-CSCF auf dem HSS (400) zu speichern.

11. Computerprogrammprodukt, das Codemittel umfasst, die angepasst sind, alle Schritte nach einem der Ansprüche 1 bis 5 durchzuführen, wenn das Programm auf einem Prozessor ausgeführt wird.

## Revendications

1. Procédé pour l'enregistrement d'un utilisateur dans un sous-système multimédia de protocole Internet, comprenant :
la réception (S1), par une fonction de commande de session d'appel de desserte (S-CSCF) (500), d'une demande d'enregistrement d'utilisateur provenant d'une fonction de commande de session d'appel interrogative (I-CSCF) (300), la demande d'enregistrement d'utilisateur comprenant une première identification de la S-CSCF,
le procédé étant **caractérisé en ce qu'**il comprend en outre :
la comparaison (S2), par la S-CSCF, de ladite première identification de la S-CSCF avec une seconde identification de la S-CSCF qui est déjà stockée dans la S-CSCF, et
l'exécution (S3), par la S-CSCF, d'un ré-enregistrement d'utilisateur sans interaction avec un serveur d'abonné résidentiel (HSS)(400) dans le cas où ladite première identification de la S-CSCF est identique à la seconde identification de la S-CSCF, et
l'exécution, par la S-CSCF, d'un enregistrement d'utilisateur avec interaction avec un HSS dans le cas où ladite première identification de la S-CSCF est différente de ladite seconde identification de la S-CSCF.

2. Procédé selon la revendication 1, dans lequel ladite comparaison comprend la détection d'une indication ou d'un paramètre dans ladite première identification de la S-CSCF comprise dans la demande d'enregistrement d'utilisateur reçue.

3. Procédé selon l'une des revendications 1 à 2, comprenant en outre :
la génération (S0), par la S-CSCF, de ladite seconde identification de la fonction S-CSCF en modifiant une première identification de la S-CSCF.

4. Procédé selon la revendication 3, dans lequel ladite modification comprend une modification effectuée en ajoutant un paramètre ou une indication à ladite première identification de la S-CSCF.

5. Procédé selon l'une quelconque des revendications 1 à 4, comprenant en outre :
le stockage (S0) de ladite seconde identification de la S-CSCF dans un HSS.

6. Fonction de commande de session d'appel de desserte (S-CSCF) (500), comprenant :
un récepteur (501) conçu pour recevoir, par la S-CSCF, une demande d'enregistrement d'utilisateur envoyée par une fonction de commande de session d'appel interrogative (I-CSCF) (300), comprenant une première identification de la S-CSCF,
la S-CSCF étant **caractérisée en ce qu'**elle comprend en outre :
un processeur (502) conçu pour comparer, par la S-CSCF, ladite première identification de la S-CSCF avec une seconde identification de la S-CSCF qui est déjà stockée dans la S-CSCF,
le processeur étant conçu en outre pour :
exécuter, par la S-CSCF, un ré-enregistrement d'utilisateur sans interaction avec un serveur d'abonné résidentiel (HSS)(400) dans le cas où ladite première identification de la S-CSCF est identique à ladite seconde identification de la S-CSCF, et
exécuter, par la S-CSCF, un enregistrement d'utilisateur avec interaction avec un HSS dans le cas où ladite première identification de la S-CSCF est différente de ladite seconde identification de la S-CSCF.

7. S-CSCF selon la revendication 6, dans laquelle ladite comparaison comprend la détection d'une indication ou d'un paramètre dans ladite première identification de la S-CSCF comprise dans la demande d'enregistrement d'utilisateur reçue.

8. Fonction de commande de session d'appel (500) selon l'une quelconque des revendications 6 à 7, dans laquelle le processeur est conçu en outre pour générer, par la S-CSCF, ladite seconde identification de la S-CSCF en modifiant une première identification de la S-CSCF.

9. Fonction de commande de session d'appel (500) selon la revendication 8, dans laquelle ladite modification comprend une modification effectuée en ajoutant un paramètre ou une indication à ladite première identification de la S-CSCF.

10. S-CSCF (500) selon l'une quelconque des revendications 6 à 9, comprenant en outre :
une mémoire conçue pour stocker ladite seconde identification de la S-CSCF dans le HSS (400).

11. Produit de programme informatique comprenant un moyen de code adapté pour exécuter toutes les étapes selon l'une quelconque des revendications 1 à 5 lorsque le programme est exécuté sur un processeur.
